# EUROPEAN PATENT APPLICATION

(11) **EP 4 567 456 A1**
(43) Date of publication of application: **11.06.2025**
(21) Application number: 23215087.0
(22) Date of filing: 07.12.2023
(51) Int. Cl.: G01S 7/36, G01S 13/00, G01S 13/42, G01S 13/87, G01S 13/88, G01S 13/46

(54) **SENSOR NETWORK FOR A DETECTION OF AN OBJECT**

(71) Applicant: HENSOLDT Sensors GmbH, 82024 Taufkirchen (DE)
(72) Inventor: SCHIKORR, Michael, 88471 Laupheim (DE)
(74) Representative: LifeTech IP Spies & Behrndt Patentanwälte PartG mbB

(57) **Abstract**

A sensor network (100) for a detection of an object (10) comprises an active radar component (no), configured to detect the object (10) by transmitting a radio signal (113) and receiving an echo (115) of the radio signal (113), a passive radar component (120), configured to receive ambient radio waves (25, 27) from stationary emitters (20) and to detect the object (10) based on a reflection (27) of the ambient radio waves (23, 25, 27) off the object (10); and a sensor fusion device (130). The active radar component is configured to detect an electromagnetic interference signal (15) emitted by the object (10), and to provide an estimation of a direction of arrival of the interference signal (15), and the sensor fusion device (130) is configured to receive data from the active radar component (110) and data from the passive radar component (120), to perform a fusion of the data from the active radar component (110) and the data from the passive radar component (120), and, based thereon, to perform the detection of the object (10).

## Description

The present invention relates to a sensor network for a detection of an object, a method for detection of an object, and in particular to passive radar assisted interferer tracking in a sensor network of active and passive radars.

### BACKGROUND

For detection of an object such as a space, land, sea or space vehicle, active radar systems acquire the object by transmitting radio signals and receiving reflections of these signals from the object, while passive radar systems only comprise receiving equipment without an own transmitter. Such passive radar systems employ ambient radio signals, transmitted by other stations or emitters which are "non-cooperative", i.e. which are not dedicated to transmitting signals specifically for the purpose of the passive radar system. Such emitters can for example be broadcast transmitters for television or radio. The passive radar system detects, locates and tracks the object by combining information from signals of these other stations which reach the passive system directly with information from signals of these other stations which reach the passive system after being reflected from the object.

A passive radar system often offers a lower accuracy of measurement of the position and the direction of an object than an active radar system, partially since wavelengths employed by emitters in the commercial broadcasting sector are typically larger than wavelengths employed by active radar. Additionally, the position and direction accuracy provided by a passive radar depends on the bandwidth of the exploited broadcast signals.

However, operation of the active radar system depends on receiving an echo of the transmitted signal. Based on this, there are several methods known for how the object may interfere with the process of its detection. For example, the object may emit deception signals in order to divert the active radar system from a localization of the object. The object may also start emitting various own radio signals, whose superposition with the active radar transmission echo will confuse or block the active radar system when trying to detect a clear echo. In such situations, the active radar system, and especially a monostatic radar device, can suffer a great reduction in accuracy, or the detection of the object may be entirely prohibited.

Therefore there is a demand for improvements in detecting an object, or for accurately measuring a position and a velocity of the object, by radar in general, and in particular in cases where the object is adapted to interfere with an active radar detection.

### SUMMARY OF THE INVENTION

A contribution to the above-mentioned problem is provided by a sensor network for a detection of an object according to claim 1, and by a method for a detection of an object according to claim 8. The dependent claims refer to further advantageous realizations of the subject matter of the independent claims.

The present invention relates to a sensor network for a detection of an object. The sensor network comprises an active radar component, or system, configured to detect the object by transmitting a radio signal and receiving an echo, i.e. a reflection, of the radio signal. The active radar component is also configured to detect an electromagnetic interference signal emitted by the object, and to provide an estimation of a direction of arrival of the interference signal. The sensor network also comprises a passive radar component, or system, configured to receive ambient radio waves from stationary emitters and to detect the object based on reflections of the ambient radio waves, advantageously from several emitters, off the object. The sensor network comprises a sensor fusion device, configured to receive data from the active radar component and data from the passive radar component, to perform a fusion of the data from the active radar component and the data from the passive radar component, and, based thereon, to perform the detection of the object. In advantageous embodiments, the sensor network is furthermore configured to perform a localization and/or a tracking of the object.

The object may be any entity detectable by the active and/or passive radar component. The object may be, with respect to any of the components of the sensor network, static, stationary, or it may follow a path or trajectory through air, through water, in space, or on ground. The object may in particular be an aerial vehicle.

The object may be equipped with a device that detects the transmission of the active radar component, and the object may thus emit the electromagnetic interference signal in order to interfere with the radio signals from the active radar component, i.e. in order to prevent the active radar component from detecting, localizing and/or tracking the object.

The interference signal may have a waveform which is adapted to the transmission signal of the active radar component, e.g. with respect to parameters such as wavelength, frequency, phase, amplitude, modulation, or repetition. The object may be configured to actively adapt the waveform to the transmission signals of the active radar component in order to disguise the object from the active radar component. The interference signal may also be a broadband signal overlapping with the radar signal frequency band.

The active radar component may be an active radar system, configured to transmit electromagnetic signals, and to receive reflections of the electromagnetic signals, in order to both detect and to localize the object. The active radar component will thus comprise both a transmit and a receive antenna. The active radar component may be configured to localize the object by ascertaining a position of the object, such as an angle and a range. The active radar component may be configured to measure a speed or velocity of the object.

The active radar component may be configured to recognize an incident electromagnetic interference signal which is transmitted by the object. In embodiments, the active radar component, the sensor fusion device, or another component of the network system may be configured to estimate if a received radio pattern could be an interference signal, or could have been emitted from the object. In some embodiments, this may be based on a time of arrival, frequency, pulse width analysis, and/or the direction of arrival. The active radar component and/or the sensor fusion device may be configured to detect a sudden change in an echo of its own transmission signals, and it may be configured to assign an interference signal to the sudden change as a cause.

The active radar component and/or the sensor fusion device may be configured to resolve the interference signal from further electromagnetic radiation received by the active radar component in order to isolate and/or identify the object as the emitter of the interference signal.

The active radar component is configured to merely provide for the estimation of the direction of arrival, based on the detection of the electromagnetic interference signal. The active radar component is thus not necessarily configured to estimate of the direction of arrival of the interference signal by itself. Rather, the detection of the interference signal and estimation of direction of arrival may be performed in the sensor fusion device, or in some other component of the network system.

The sensor network may be configured to perform the estimation of the direction of arrival with a high accuracy. For example, the active radar component may be configured to use a maximum likelihood method or monopulse technique for an angle of arrival estimation of the interference signal based on gains of several antennas in the monostatic active radar component. The sensor fusion device may be configured to correlate data from the active and passive radar components in order to determine the position of the object with high accuracy based on the passive radar track and the accurate estimate the direction of arrival.

The sensor network may be configured to provoke the object to transmit the interference signal several times, or repeatedly. Emissions from the active radar component may thus be used as a decoy to provoke the interference signal. Thus, although the active radar component may not be capable to individually localize the object, provoking the frequent emission of the interference signal can be used to improve the detection, localization and/or tracking of the object performed by the sensor fusion device.

The passive radar component may be a passive radar system, comprising a receiver, but no transmitter. The passive radar component may be configured to receive electromagnetic signals transmitted by other sources whose positions are known, and in particular by stationary or static emitters like television or radio broadcast stations. The passive radar component may thus be a passive coherent location radar, PCL, i.e., it may be configured to exploit as transmitters of opportunity especially commercial signals in an environment. The emitters are configured to emit electromagnetic radiation, or radio waves, which can be received by the passive radar component directly as well as after being reflected off the object. Based on the received electromagnetic signals and on information about positions of the stationary emitters, the passive radar component is configured to detect the object, and may be configured to localize the object. The passive radar component may also be configured to measure a speed or velocity of the object.

In some embodiments, the passive radar component is configured to receive radio signals at a lower frequency than radio signals transmitted and received by the active radar component. However, in some embodiments the passive radar may also be configured to employ frequencies that are higher than a characteristic frequency of the radio signal of the active radar component.

The sensor fusion device may comprise its own processor, or radar data processing equipment. The sensor fusion device may be separate from the active and passive radar components, or it may be integrated into the active or in the passive radar component. Based on a fusion of the data from the active radar component and the data from the passive radar component, the sensor fusion device may be configured to localize the object with respect to the active radar component, the passive radar component, the sensor fusion device, and/or some other location. The sensor fusion device may be configured to localize the geographic position of the object.

Optionally, the active radar component comprises a monostatic radar device, i.e., the transmit and receive antennas are co-located. The transmit antenna may be identical to the receive antenna. However, the active radar component may also have separate transmit and receive antennas, albeit positioned very closely (e.g. closer by an order of magnitude) compared to typical distances between the active radar component and the object. The active radar component may comprise a monostatic phased array antenna.

The active and the passive radar may be deployed at a spatial distance from each other.

Optionally, the sensor fusion device is configured to calculate a position of the object based on the spatial distance between the active radar component and the passive radar component. The sensor fusion device may thus be configured to perform, based on the fusion of the data from the active and passive radar components, the detection, localization and/or tracking of the object by means of e.g. a geometric method employing the spatial distance, such as a triangulation. While the active and/or the passive radar component may independently be configured to localize the object, the spatial distance may in particular be used in a process of the sensor fusion device to achieve a higher accuracy, i.e. to determine a range and/or an angle for a position of the object more precisely.

The sensor fusion device may be configured to improve the detection and the localization of the object by further methods, such as employing more than one independent active or passive radar component, several measuring times or repetitions of measuring, and adaptations of an update frequency.

Optionally, the passive radar component and/or the active radar component are mobile, i.e., configured for changing place. The active radar component and/or the passive radar component may be configured on a vehicle, which may be a land, sea, air or space vehicle. The active radar component and/or the passive radar component may be configured to indicate (e.g. broadcast) their respective positions continuously or repeatedly to the sensor fusion device.

In some embodiments, the sensor network may comprise no further transmitters or receivers than those of the active radar component and the passive radar component. The sensor network may thus be very agile and quickly deployable in various environments or situations.

Optionally, at least one of the active radar component, the passive radar component, and the sensor fusion device is configured to track the object. Tracking may refer to following the object continuously, over time, along its path or trajectory. The sensor fusion device may comprise a system tracker in order to fuse the data of the active and the passive radar components, and object localization data from the active and the passive radar components may be associated to system tracks. The spatial distance mentioned above may also be employed for tracking the object. The spatial distance may in particular be used in a process of the sensor fusion device to determine a position of the object more precisely. In embodiments, the active and/or the passive radar component are independently configured to track the object, and the sensor fusion device is configured to perform a tracking fusion, i.e. a fusion of tracking data. In other embodiments, the active and the passive radar component are merely configured to detect and localize the object, and tracking is only performed in the sensor fusion device. Further embodiments may realize hybrid forms of the embodiments just mentioned.

Optionally, the sensor fusion device is configured to provide a system track of the object. The system track is obtained based on combining data from both the active radar component and the passive radar component.

Optionally, the active radar component is configured to perform the estimation of the direction of arrival. In addition, or alternatively, an auxiliary sensor or the sensor fusion device may be configured to estimate the direction of arrival.

Embodiments further relate to a method for a detection of an object. The method comprises detecting an electromagnetic interference signal emitted by the object. The method further comprises providing an estimation of a direction of arrival of the interference signal. The method further comprises receiving ambient radio waves reflected off the object. The method further comprises detecting the object based on the direction of arrival of the interference signal and on the ambient radio waves reflected off the object, by fusing respective data.

This method may comprise detecting the object by active radar, i.e. transmitting a radio signal to the object and receiving an echo of the radio signal, and switching to detecting the interference signal and providing a bearing of the interference signal, detecting the object by passive radar, fusing data from detecting the object by active radar and data from detecting the object by passive radar, and performing the detection of the object based on the fused data. An effect of the method is that an accuracy of the detection can be greatly improved with respect to an accuracy achieved by either detecting the object by passive radar or by detecting the object by active radar only, and that even if the interference signal compromises or prohibits the active radar detection, a detection and localization of the object with comparable precision to a detection by active radar may be achieved.

Optionally, the method further comprises provoking the object to an emission of the interference signal, based on transmitting a radar signal by an active radar to the object.

The described method can at least partially be implemented on a computer, i.e. by software on data processing devices.

Embodiments therefore further relate to a computer program product comprising a program which, when the program is executed by a data processing machine, causes the data processing machine to carry out the method as described above.

Important aspects of the sensor network and method may be summarized as follows.

The invention describes a principle of a passive radar assisted interferer tracking of an object by the sensor network. The sensor network comprises an active radar component and a passive radar component, which can be positioned at a spatial distance.

In some embodiments, the sensor network may comprise no further sensors than the active radar component and the passive radar component. This may for example provide the benefit that the system can be deployed quickly. However, in other embodiments, there may be several active radar components, and/or several passive radar components. This can have the advantage that an accuracy of detection, localization, tracking and/or speed or velocity measurement can be further enhanced.

For the active radar component, a monostatic radar device in which both the transmitting and receiving antennas are located is advantageous. The active radar component has a functionality to detect incident electromagnetic interference signals, and to estimate the direction of arrival of the interference signals. Such interference signal detections include the estimation of a direction of arrival of the interference signal, without measurement of a range of the object transmitting the interference signals.

The passive radar component uses transmitted electromagnetic signals of other spatially distributed emitters, which may e.g. be broadcast transmitters for television or radio. The passive radar component is configured to receive signals of the broadcast transmitters via direct propagation, as well as signals reflected from other objects, e.g. airplanes. In case of signal reception of reflections off the object of interest from several broadcast transmitters, said object can be located by examination of signal time delays between direct and reflected signals. The passive radar component maybe configured to measure a velocity of the object based on Doppler shifts between reflected signals and direct signals. In some embodiments, the passive radar component may offer object measurements of lower accuracy compared to the active radar component, in particular for the measurement accuracy of the target direction.

In the sensor network, data of the active and passive radar components are fused in the sensor fusion device, wherein the target data of the individual sensors are associated to system tracks.

The object may be equipped with a device that detects the transmissions of the active radar component and transmits interference signals towards the active radar component with waveform parameters that are matched to the radar signal or with a frequency band overlapping with the radar frequency band. The object is thus interfering with the active radar, and it prevents the object from being detected or disturbs the measurement. In particular, the process of detecting the radar echo signal in the active radar component may be suppressed or impaired by the interference signals. On the other hand, the interference signal is detected by the active radar component, and an estimation of the direction of arrival is possible with a high accuracy, depending on radar antenna characteristics of the active radar component.

In order to achieve object data of high quality it is of advantage to frequently provoke the interference signals by illuminating the object accordingly. Thus, active radar may be used as decoy to provoke interference signals form the object.

An interferer measurement with direction of arrival is then associated in the sensor network with the passive radar track to a system track. Thus, in the system track a complete state of the object can be available, including range measurement from passive radar and the direction of the object from the active radar interference measurement. The direction of the object is available with high measurement accuracy, gathered from the active radar interference measurement.

The sensor network can thus provide target measurements, including the object position with object distance and object direction, with a very high accuracy.

### BRIEF DESCRIPTION OF THE DRAWINGS

Various embodiments of the present invention will be described in the following by way of examples only, and with respect to the accompanying drawings, in which:
- Fig. 1: depicts a sensor network for a detection of an object according to the present invention.
- Fig. 2: depicts other details of an embodiment of the sensor network.
- Fig. 3: shows steps of an embodiment of the method for a detection of an object according to the present invention.
- Fig. 4: shows further steps in an embodiment of the method.

### DETAILED DESCRIPTION

Various examples will now be described more fully with reference to the accompanying drawings in which some examples are illustrated. It should be understood that there is no intent to limit examples to the particular forms disclosed, but on the contrary, examples are to cover all modifications, equivalents, and alternatives falling within the scope of the disclosure as defined by the subsequent claims and the description.

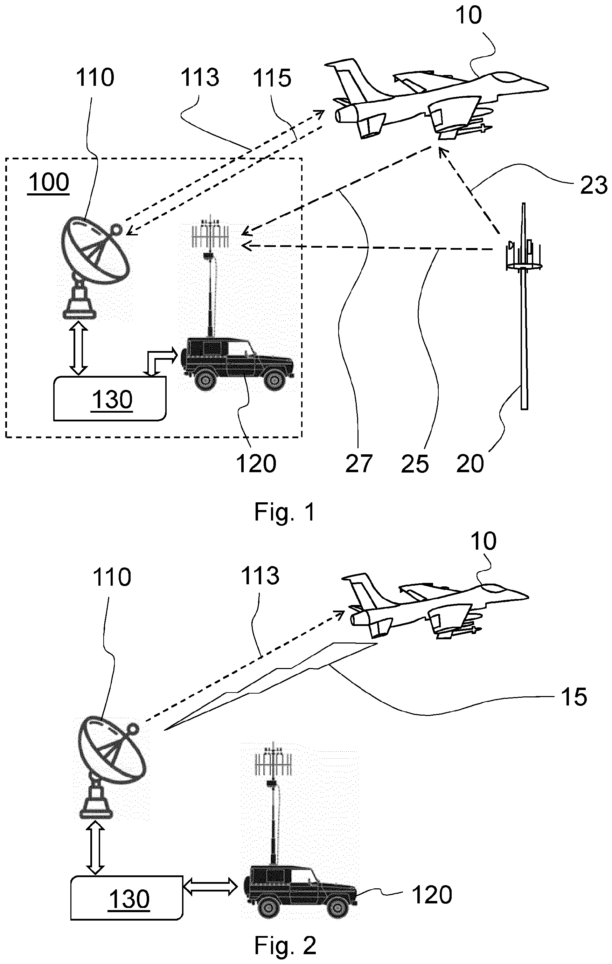

**Fig. 1** depicts an embodiment of the sensor network 100 for a detection of an object 10, here an airplane. The sensor network 100 comprises an active radar component 110 which is configured to detect the object 10 by transmitting a radio signal 113 and receiving an echo 115 of the radio signal 113, a passive radar component 120, configured to receive ambient radio waves 25, 27 from stationary emitters 20 (only one of which is depicted in the figure) and to detect the object 10 based on a reflection 27 of the ambient radio waves off the object 10, and a sensor fusion device 130. The sensor fusion device 130 is configured to receive data from the active radar component 110 and data from the passive radar component 120, and to perform a fusion of the data from the active radar component 110 and the data from the passive radar component 120 in order to, based thereon, perform the detection of the object 10.

The passive radar component 120 employs radio signals from third-party, non-cooperative emitters, which may in particular be commercial transmitters of television, cellphone, or radio broadcasting stations. In case of signal reception of object reflections 27 from several broadcast transmitters, the object 10 can be located by examination of the signal time delays between direct signals 25 and reflected signals 27. Further, Doppler shifts between reflected signals 27 and direct signals 25 admit an estimation of an object velocity. Thus, based on a combination of directly received signals 25 and signals 27 reflected from the object 10, the passive radar component 120 may be configured to localize the object 10, and to measure a speed or velocity of the object 10. The passive radar component 120 may also be configured to track the object 10. The passive radar component 120 in this embodiment is mobile, and in particular installed on a ground vehicle. It can be deployed at various positions and spatial separations with respect to the active radar component 110. However, in other embodiments the passive radar component 120 may be installed at a fixed position.

The active radar component 110 may likewise be configured to detect, localize and/or track the object 10, as well as determine a speed or velocity of the object 10, on its own. The active radar component 110 is advantageously a monostatic radar device.

The sensor fusion device 130 can be configured to determine object tracks, and to associate data of the active radar component 110 and the passive radar component 120 to these tracks.

**Fig. 2** depicts further details of an embodiment of the sensor network 100. In this figure, stationary emitters 20 and their radio signals 23, 25, 27 are not depicted. The active radar component 110 is operating by transmitting and receiving signals 113 in direction of the object 10, which may be performed with some update rate according to a typical search or track update rate of active radar systems. It is assumed that the object 10 is equipped with a device that detects the transmissions 113 of the active radar component 110 and transmits interference signals 15 towards the active radar component 110, with waveform parameters (such as frequency, phase, amplitude or pulse rate) that are matched to the radar signal 113 of the active radar component 110. A detection of a radar echo 115 merely from a reflection of the transmission signal 113 is suppressed by the interference signals 15. The object 10 is thus interfering with the active radar, which may lower an accuracy of an operation of the active radar component 110, or may prevent the object 10 from being detected or localized by the active radar component 110 altogether.

However, the active radar component 110 is configured to detect the interference signal 15 (or a superposition of a reflected transmission signal 113 and the interference signal 15). While this may not suffice to accurately detect the object 10, the active radar component 110 may be configured to recognize the interference signal 15 as such, and it may be configured to register its characteristics, such as a time of arrival, frequency, amplitude, or phase of the interference signal 15. At least some of this data is forwarded to the sensor fusion device 130, which is configured to combine this data with data from the passive radar component 120, in order to thereby still provide the detection, localization, tracking and/or measurement of the object 10 with high accuracy.

The active radar component 110 may in particular be configured to provide a direction estimate, or bearing, for the interference signal 15 and thus for the object 10. Eventually, in the sensor fusion device 130 a complete state of the object 10 can be available, including a range measurement from the passive radar component 120 and a high accuracy direction measurement from the active radar component 110.

In order to achieve an object state of high quality, it is of advantage to provoke frequent interferer measurements by illuminating the object 10 frequently. In other words, the active radar component transmissions may be used as decoy to provoke the object 10 into emitting interference signals 15, thereby increasing the accuracy of the measurement in the sensor fusion device 130.

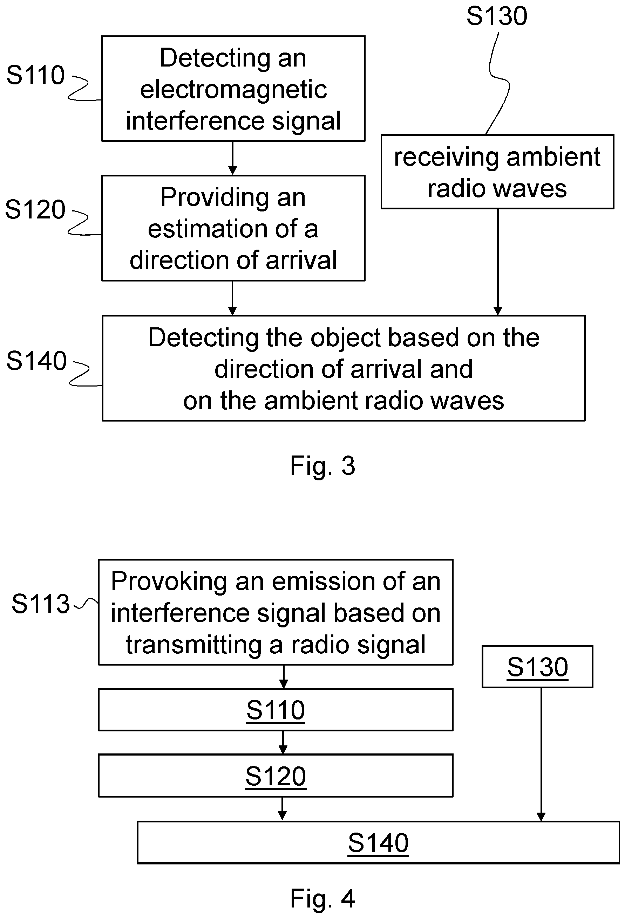

**Fig. 3** shows steps of an embodiment of the method for a detection of an object 10. The method comprises detecting S110 an electromagnetic interference signal 15 emitted by the object 10. The method further comprises providing S120 an estimation of a direction of arrival of the interference signal 15. The method further comprises receiving S130 ambient radio waves 25, 27 from stationary, non-cooperating emitters 20, which can be performed simultaneously and/or in parallel to detecting S110 the interference signal 15. The method then comprises detecting S140 the object 10 based on the direction of arrival of the interference signal 15 and on a reflection 27 of ambient radio waves 23, 25, 27 off the object 10.

**Fig. 4** shows further steps in an embodiment of the method. As in Fig. 3, the method comprises detecting S110 an electromagnetic interference signal 15 emitted by the object 10, providing S120 an estimation of a direction of arrival of the interference signal 15, and receiving S130 ambient radio waves 23, 25, 27. Again, the object 10 maybe interfering with receiving an echo 115 of a radio, or radar, signal 113 by emitting the interference signal 15. The interference signal 15 may not totally prevent a reception of the echo 115, but it may greatly reduce an accuracy of detection by merely active radar.

In order to ameliorate the detection result, the method comprises provoking S113 an emission of the interference signal 15 based on the radio signal 113, wherein this step and estimating S120 a direction of arrival of the interference signal 15 may be performed repeatedly and/or in various patterns. Detecting S140 the object 10 is again based on data from the ambient radio waves 23, 25, 27, on whatever may or may not have been received as echo 115 from the original active transmission 113, and on the direction of arrival of the interference signal 15.

The description and drawings illustrate the principles of the disclosure. It will thus be appreciated that those skilled in the art will be able to devise various arrangements that, although not explicitly described or shown herein, embody the principles of the disclosure as defined by the claims, and are included within its scope.

In particular, while each of the described embodiments may stand on its own as a separate example, it is to be noted that in other embodiments the defined features can be combined differently, i.e. a particular feature described in one embodiment may also be realized in other embodiments. Such combinations are covered by the disclosure herein.

### List of reference signs

- 10: object
- 15: interference signal
- 20: stationary emitter
- 23: ambient radio wave
- 25: directly received ambient radio wave
- 27: ambient radio wave reflected off the object
- 100: sensor network
- 110: active radar component
- 113: transmitted radio signal
- 115: echo of transmitted radio signal
- 120: passive radar component
- 130: sensor fusion device
- S110, S113, S120, S130, S140: steps of a method

## Claims

1. A sensor network (100) for a detection of an object (10), the sensor network (100) comprising:
an active radar component (no), configured to detect the object (10) by transmitting a radio signal (113) and receiving an echo (115) of the radio signal (113);
a passive radar component (120), configured to receive ambient radio waves (25, 27) from stationary emitters (20) and to detect the object (10) based on a reflection (27) of the ambient radio waves (23, 25, 27) off the object (10); and
a sensor fusion device (130),
wherein the active radar component is configured to detect an electromagnetic interference signal (15) emitted by the object (10), and to provide an estimation of a direction of arrival of the interference signal (15), and
wherein the sensor fusion device (130) is configured
- to receive data from the active radar component (110) and data from the passive radar component (120), and
- to perform a fusion of the data from the active radar component (110) and the data from the passive radar component (120), and, based thereon, perform the detection of the object (10).

2. The sensor network (100) according to claim 1, wherein the active radar component (110) comprises a monostatic radar device.

3. The sensor network (100) according to any one of the preceding claims, wherein the sensor fusion device (130) is configured to calculate a position of the object (10) based on a spatial distance between the active radar component (110) and the passive radar component (120).

4. The sensor network (100) according to any one of the preceding claims, wherein at least one of the passive radar component (120) and the active radar component (110) is mobile.

5. The sensor network (100) according to any one of the preceding claims, wherein at least one of the active radar component (110), the passive radar component (120), and the sensor fusion device (130) is configured to track the object (10).

6. The sensor network (100) according to any one of the preceding claims, wherein the sensor fusion device (130) is configured to provide a system track of the object (10).

7. The sensor network (100) according to any one of the preceding claims, wherein the direction of arrival of the interference signal (15) is determined in at least one of the following ways:
- the active radar component (110) is configured to perform a estimation of the direction of arrival,
- an auxiliary sensor or the sensor fusion device (130) is configured to estimate the direction of arrival.

8. A method for a detection of an object (10), the method comprising:
detecting (S110) an electromagnetic interference signal (15) emitted by the object (10);
providing (S120) an estimation of a direction of arrival of the interference signal (15);
receiving (S130) ambient radio waves (27) reflected off the object (10);
and
detecting (S140) the object (10) based on the direction of arrival (15) and on the ambient radio waves (27) reflected off the object (10).

9. The method according to claim 8, wherein the method further comprises provoking (S113) an emission of the interference signal (15) based on transmitting a radar signal (113) to the object (10).

10. A computer program product comprising a program which, when the program is executed by a data processing machine, causes the data processing machine to carry out the method according to claim 8 or claim 9.
